# EUROPÄISCHE PATENTSCHRIFT

(11) **EP 2 436 555 B1**
(45) Veröffentlichungstag und Bekanntmachung des Hinweises auf die Patenterteilung: **27.08.2014**
(21) Anmeldenummer: 10184175.7
(22) Anmeldetag: 30.09.2010
(51) Int. Cl.: B60P 1/44

(54) **Kassettenlift**
Ramp lift
Dispositif de montée de fauteuil roulant

(43) Veröffentlichungstag der Anmeldung: 04.04.2012
(73) Patentinhaber: Gustav Bruns Maschinenbau und Förderanlagen GmbH & Co. KG, 26689 Apen (DE)
(72) Erfinder: Bruns, Gerit, 26689, Apen (DE)
(74) Vertreter: Eisenführ Speiser

(56) Entgegenhaltungen:
- WO-A1-88/03484
- BE-A3- 1 013 289
- US-A- 5 375 962
- US-A1- 2001 048 872
- US-A1- 2006 245 883

## Beschreibung

Die Erfindung zeigt einen Fahrzeuglift in Form einer Kassette, insbesondere für Rollstuhlfahrer, nach dem Oberbegriff des ersten Hauptanspruchs.

Fahrzeuglifte, insbesondere für Rollstuhlfahrer, gibt es in verschiedenen Ausführungen. Sie dienen dazu, den Rollstuhlfahrer aus der Straßenebene samt dem Rollstuhl auf die Ebene des Bodens eines Transportfahrzeuges anzuheben. In der angehobenen Position kann der Rollstuhlfahrer im Regelfall aus eigener Kraft in das Fahrzeug hineinrollen. Wichtig ist darüber hinaus, dass die Lifte während der Fahrt sicher im oder am Fahrzeug verstaut sein müssen und aus ihrer eingefahrenen Stellung in ihre Betriebsstellung bewegbar sind. In der Betriebsstellung findet dann das Anheben bzw. Absenken der Rollstuhlfahrer statt.

In einer aus dem Handel bekannten Ausführungsform haben die Fahrzeuglifte zwei parallelogrammartige Hubwerke, die eine Plattform zwischen sich tragen und so gebaut sind, dass sie die nötige Vertikalbewegung der Plattform und auch das Einfahren der Plattform in das Fahrzeug bzw. das Ausfahren ermöglichen. Derartige Rollstuhllifte befinden sich überwiegend am Fahrzeugheck hinter der dortigen Hecktür und sind hinsichtlich Gestehungskosten und Platzbedarf aufwändig.

Eine andere handelsübliche Ausführungsform eines Rolistuhlliftes ist als Selbstfahrer-Schwenklift bekannt und weist eine im Fahrzeuginneren stehende Säule auf, an der eine Plattform verschwenkbar und vertikal bewegbar befestigt ist. Beim Drehen der Säule um ihre Längsachse bewegt sich die zunächst auf dem Boden des Fahrzeuges aufliegend Plattform durch eine Fahrzeugtür nach außen und kann dann bis zur Straßenebene abgesenkt werden, dort einen Rolistuhlfahrer aufnehmen, anheben und durch Schwenkbewegung in das Fahrzeug hinein befördern. Nachteilig an diesen Liften ist, dass sie innerhalb des Fahrzeuges Platz zu Lasten des Beifahrerplatzes benötigen, der benötigte Platz nicht anderweitig verwendbar Ist, wenn der Lift außer Betrieb ist, und dass die Komponenten des Liftes während der Fahrt durch Klappern stören.

Weiterhin gibt es sogenannte Kassettenlifle. Diese bestehen aus einer Kassette, die seitlich außen unter dem Boden eines Fahrzeuges befestigt ist. Die Kassette hat einen Boden, zwei Seltenwände und eine Rückwand, so dass sie zusammen mit dem Fahrzeugboden einen durch eine vordere Klappe verschließbaren Hohlraum bildet.

Innerhalb der Kassette läuft ein Schlitten auf Rollen. Dieser Schlltten trägt an seiner, der Rückwand der Kassette abgekehrten Stirnseite die Plattform. Die Tragfunktion übernehmen zwei Tragarme, die nach dem Ausfahren aus der Kassette das Heben und Senken der Plattform bewirken. Die Tragarme ergreifen die Plattform an deren Seiten, lassen aber die in Ausfahrrichtung der Plattform vornliegende Stirnkante frei, so dass der Rollstuhlfahrer nur Ober diese Stirnkante auf die Plattform hinauffahren kann.

Ein derartiger Kassettenlift ist beispielsweise aus der WO 88103484 A1 bekannt. Der Lift weist ein Führungsgestell auf, in dem eine Plattform verfahrbar aufgenommen ist. Die Plattform kann zwischen einer eingefahrenen Stellung unterhalb eines Fahrzeuges und einer ausgefahrenen Stellung neben dem Fahrzeug verfahren werden. In der ausgefahrenen Stellung kann die Plattform In eine untere und eine obere Position relativ zum Gestell bewegt werden. Zu diesem Zweck weist der Lift zu beiden Längsseiten der Plattform Tragarme auf, mit denen auf je einer Längsseite ein Scherenmechanismus ausgebildet ist. Dadurch führt die Plattform während des Anhebens und Absenkens eine Versatzbewegung quer zur Fahrzeuglängsseite aus und des Weiteren Ist die Plattform nur von ihrer Stirnseite aus zugänglich.

Kassettenlifte vorbezeichneter Gattung sind des Weiteren auch nach der US 5,376,962 A oder der US 2001/048872 A1 bekannt. Die daraus bekannten Kessettenlifte weisen ebenfalls entsprechend verstellbeweglich aufgenommene Plattformen auf, die anstelle des Scherenmechanismusses an jeder Längsseite jeweils zwei parallel zueinander verschwenkbare Tragarme aufweisen. Gemäß der US 5,375,962 A ist jeder Tragarm mit einer Antriebswelle verbunden und somit als Kurbelarm ausgebildet, mittels denen die Plattform angehoben oder abgesenkt wird. Die Tragarme sind an den Längsseiten der Plattform angeordnet, wodurch die Tragarme entsprechend in einer Ebene verschwenkbar sind, die parallel zur horizontalen Bewegungsrichtung der Plattform verläuft. Auch bei diesen Kassettenliften ist dies Plattform von ihrer Stirnseite aus zugänglich.

Kassettenlifte der beschriebenen bekennten Art haben zwei Nachteile. Zum einen benötigen sie unterhalb des Fahrzeugbodens recht viel Platz in horizontaler Richtung. Der steht aber aufgrund bereits eingebauter Komponenten, wie z. B. ein Benzintank oder eine Kadanwelle, nicht in jedem Fahrzeug zur Verfügung. Des Weiteren braucht der Rolistuhlfahrer neben dem Fahrzeug verhältnismäßig viel Platz, denn er kann die Plattform nur von deren Stirnseite aus befahren, so dass neben dem Fahrzeug ein Freiraum entsprechend der Länge der ausgefahrenen Plattform zuzüglich mindestens der Länge eines Rollstuhles benötigt wird. Dieser Platz steht aber auf den herkömmlichen Parkplätzen nicht immer zur Verfügung und schränkt die Möglichkeiten des Rollstuhlfahrers bei der Parkplatzsuche stark ein.

Aufgabe der Erfindung ist es einen Fahrzeuglift, insbesondere für Rollstuhlfahrer, aufzuzeigen, der eine besonders kompakte Bauweise erlaubt. Ferner ist es Aufgabe der Erfindung einen Fahrzeuglift aufzuzeigen, der ein ungehindertes Ein- und Aussteigen auch bei begrenzten Parkflächen erlaubt.

Die Aufgabe wird durch den erfindungsgemäßen Fahrzeuglift der eingangs genannten Art dadurch gelöst, dass jeder Tragarm in der ausgefahrenen Stellung der Plattform in einer senkrechten Ebene zwischen der Plattform und dem Gestell schwenkbar Ist, die senkrecht zur horizontalen Bewegungsrichtung der Plattform verläuft.

Nach dieser Ausführungsform ist der Fahrzeuglift besonders kompakt ausgebildet. Die kompakte Bauweise des Fahrzeugilfts zeigt sich darin, dass das Gestell. Gehäuse oder dergleichen eine Grundfläche aufweist, die geringfügig größer ist als die Plattform selbst. Hierzu ist jeder Tragarm bzw. die Längsachse jedes Arms in einer Ebene angeordnet, die senkrecht zur horizontalen Bewegungsrichtung der Plattform verläuft. Die Bautiefe des Gestells in horizontaler Bewegungsrichtung der Plattform wird auf diese Weise nicht durch die Länge der Tragarme sondern nur noch durch deren Dicke in horizontaler Richtung beeinflusst. Ebenso erlaubt die Schwenkbarkeit jedes Arms in der eingefahrenen Stellung der Plattform die Tragarme parallel zur Ebene der Plattform zu schwenken. Dadurch ist der Raumbedarf der Tragarme im Gestell klein.

Ferner ermöglicht die erfindungsgemäße Ausführungsform einen besonders variablen Ein- und Aufstieg auf die Plattform. In der ausgefahrenen Stellung der Plattform sind die Tragarme in einer senkrechten Ebene zwischen der Plattform und dem Gestell bewegbar. Die Plattform ist daher für den Rollstuhlfahrer bzw. den Anwender von drei Seiten aus zugänglich. Neben Ihrer Stirnseite kann sie vielmehr auch über ihre beiden freien Seiten zum Ein- und Aussteigen genutzt werden. Die Lösung ist für die Fälle besonders vorteilhaft, bei denen der erfindungsgemäße Fahrzeuglift an der Seite des Kraftfahrzeugs eingebaut ist und der Parkraum zur Ausstiegsseite eingeschränkt ist.

Besonders vorteilhaft ist eine Ausführungsform des erfindungsgemäßen Fahrzeuglifts mit zwei Tragarmen. Diese verlaufen in zueinander parallelen Schwenkebenen senkrecht zur horizontalen Bewegungsrichtung der Plattform und sind gleichsinnig synchron bewegbar. Diese Ausführungsform ermöglicht eine besonders einfach und kostengünstig realisierbare Anordnung zum stabilen Lagern der Plattform, vorzugsweise in einer horizontalen Ausrichtung. Die Plattform ist mit jedem Tragarm drehbar gekoppelt. Bei einer Ausfüh-rungsform mit nur einem Tragarm wäre eine zusätzliche Vorrichtung notwendig, um die Kippbewegung der Plattform um die Lagerachse des Arms auszugleichen. Der zweite Tragarm verhindert dies auf einfache Weise, indem die Lagerung des zweiten Tragarmes versetzt zur Lagerung des ersten Tragarmes angeordnet ist und damit die Plattform gegen Kippbewegungen um die Lagerachse des ersten Arms abstützt und umgekehrt. Des Weiteren ermöglicht die synchrone und gleichsinnige Bewegung der Tragarme eine gleichförmige Parallelbewegung der Plattform zwischen der oberen und unteren Position relativ zum Gestell. Damit die Tragarme in einem Bereich oberhalb des Gestells schwenkbar sind, sind deren Längsachsen in zueinander parallelen Schwenkebenen angeordnet, die in Richtung der horizontalen Bewegungsrichtung zueinander leicht versetzt zueinander sind. Beide Schwenkebenen sind senkrecht zur horizontalen Bewegungsrichtung der Plattform angeordnet und befinden sich im ausgefahrenen Zustand der Plattform zwischen dem Gestell und der Plattform.

Weiterhin ist eine erfindungsgemäße Ausführungsform des Fahrzeuglifts vorteilhaft, bei dem im Gestell ein die Plattform tragender und verfahrender Schlitten vorgesehen ist. Diese Konstruktion ermöglicht es, das Gewicht der Plattform auf einen größer als die Tragarme dimensionierten Schlitten zu übertragen. Die Belastungen werden auf diese Weise besser auf das Gestell verteilt. Um gleichzeitig die kompakte Bauweise des Fahrzeuglifts zu ermöglichen, ist der Schlitten so ausgebildet, dass er in der horizontalen Bewegungsrichtung wesentlich kürzer ist als senkrecht dazu.

Eine weitere vorteilhafte und erfindungsgemäße Ausführungsform des Fahrzeuglifts ist dadurch gekennzeichnet, dass jeder Tragarm mittels einer Antriebswelle am Schlitten gelagert ist und die Längsachse jeder Antriebswelle im Wesentlichen in der horizontalen Bewegungsrichtung verläuft. Mittels dieser Ausführungsform ist die Schwenkbarkeit der Tragarme in der Ebene senkrecht zur horizontalen Bewegungsrichtung besonders einfach realisierbar. Die Antriebswelle stellt diejenige Welle dar, die zum Bewegen des Arms angetrieben wird.

Ferner ist eine erfindungsgemäße Ausführungsform des Fahrzeuglifts bevorzugt, bei dem die Längsachse der Antriebswellen im Wesentlichen unter oder oberhalb der Plattform in der eingefahrenen Stellung angeordnet sind. Mittels dieser Anordnung der Antriebswellen am Schlitten ist der Platzbedarf der Tragarme in vertikaler Richtung zwar größer, aber es können längere Tragarme eingesetzt werden, die einen größeren Hub der Plattform ermöglichen.

Eine weitere bevorzugte Ausführungsform des erfindungsgemäßen Fahrzeuglifts ist dadurch gekennzeichnet, dass von jeder Antriebswelle zusätzlich ein Hebelarm radial absteht und die freien Enden der Hebelarme benachbarter Antriebswellen mittels einer Kuppelstange verbunden sind. Die Antriebswellen sind auf diese Weise miteinander so gekoppelt, dass der Antrieb einer Antriebswelle ausreicht, um alle anderen Antriebswellen gleichförmig anzutreiben.

Weiterhin ist eine Ausführungsform des erfindungsgemäßen Fahrzeuglifts bevorzugt, bei welchem von jeder Antriebswelle ein zweiter Hebelarm radial absteht, der zum ersten Hebelarm der Antriebswelle axial beabstandet ist. Die freien Enden der zweiten Hebelarme benachbarter Antriebswellen sind mittels einer weiteren Kuppelstange verbunden. Mittels dieser Ausführungsform sind die Antriebswellen noch gleichmäßiger antreibbar. Ferner verteilt sich die Belastung der Hebelarme auf nun insgesamt vier Hebelarme, so dass das Risiko für Materialschäden bei langzeitiger Verwendung des Fahrzeugschlittens verringert wird.

Vorteilhaft ist eine erfindungsgemäße Ausführungsform mit ersten Hebelarmen, die auf der einen Stirnseite des Schlittens, und zweiten Hebelarmen, die auf einer anderen Stirnseite des Schlittens angeordnet sind. Die Stirnseiten sind diejenigen Flächen des Schlittens, die parallel zur Schwenkebene verlaufen.

Weiterhin ist eine Ausführungsform des erfindungsgemäßen Fahrzeuglifts mit einer Antriebseinrichtung zum Schwenken der Tragarme vorteilhaft, die an einem der Hebelarme auf der einen Stirnseite des Schlittens angreift und die Tragarme sich auf der anderen Stirnseite des Schlittens befinden. Mittels dieser Ausführungsform wird auf einfache Weise verhindert, dass der Schwenkbereich der Tragarme durch die Antriebseinrichtung eingeschränkt wird. Die Antriebseinrichtung ist in dieser Ausführungsform an der inneren Stirnseite des Schlittens, also innerhalb des Gestells angeordnet.

Ferner ist eine Ausführungsform der Erfindung eines Fahrzeuglifts mit einer Antriebseinrichtung vorteilhaft, die einen hydraulischen Hubzylinder enthält, dessen Hubachse parallel zur Schwenkebene der Tragarme ausgerichtet ist. Diese Anordnung erlaubt analog zu der Anordnung und Bewegungsebene der Tragarme eine platzsparende Konstruktion des Fahrzeuglifts. Zudem ermöglicht der hydraulische Hubzylinder auch mit einer kompakten Bauweise große Lasten anzuheben.

Nach einer weiteren vorteilhaften Ausführungsform befindet sich im Gestell eine Verzahnung. Diese verläuft an der Innenseite des Gestells in Richtung der horizontalen Bewegung der Plattform. Ein Antriebszahnrad eines Schlittenantriebs greift in die Verzahnung ein.

Besonders bevorzugt ist eine Ausführungsform, bei welcher der Schlitten hohl ausgebildet ist und der Schlittenantrieb sich innerhalb des Schlittens befindet. Diese Ausführungsform erreicht auf besonders einfache Weise, den Schlittenantrieb platzsparend im Fahrzeuglift zu platzieren.

In einer weiteren vorteilhaften Ausführungsform der Erfindung enthält der Schlittenantrieb einen Elektromotor. Der Elektromotor ist sowohl aufgrund der Möglichkeit der kompakten Bauweise, als auch wegen der einfachen Drehzahlsteuerung für diesen Anwendungszweck besonders gut geeignet.

Des Weiteren ist eine Ausführungsform des Fahrzeuglifts sehr vorteilhaft, bei der die Plattform in ihrer in Ausfahrrichtung hinterem Bereich eine um etwa 180° schwenkbare Brückenplatte aufweist, welche die Plattform entgegen der Ausfahrrichtung erweitert und um eine Drehachse parallel zur Schwenkebene der Tragarme vorgespannt gelagert ist. Die Brückenplatte dient zur Überbrückung der Lücke zwischen der Plattform und dem Innenraum des Kraftfahrzeugs. Die Bewegung der Brückenplatte erfolgt nämlich automatisch und ohne zusätzliche Steuerung seitens des Anwenders. Sobald sich die Plattform in der ausgefahrenen Stellung befindet bewirkt die Vorspannung der Brückenplatte deren automatische Schwenkung um die Drehachse in die vorgespannte Richtung. Die Vorspannung ist dabei so ausgerichtet, dass sich die Brückenplatte entgegen der Ausfahrrichtung ausrichtet und auf dem Fahrzeugboden ablegt.

Vorteilhaft ist auch, dass die Brückenplatte beim Einfahren der Plattform aus einer, die Plattform in Einfahrrichtung verlängernden Position durch Anlage der Brückenplatte an einer Gestellkante in eine in Ausfahrrichtung weisende Position verschwenkbar ist und die Gestellkante diejenige Kante des Gestells ist, welche sich im eingefahrenen Zustand der Plattform oberhalb der Plattform senkrecht zu der Ausfahrrichtung und benachbart zur Schwenkebene erstreckt. Mittels dieser Ausführungsform ist auf besonders einfache Weise die automatische Verstauung der Brückenplatte in einer platzsparenden Weise im Gestell des Fahrzeuglifts möglich.

Vorteilhaft ist weiter eine Ausführungsform bei der die Brückenplatte mittels einer Drehfeder vorgespannt gelagert ist. Auf diese Weise ist die automatische Bewegung der Brückenplatte in der ausgefahrenen Stellung der Plattform besonders günstig realisierbar.

Eine weitere vorteilhafte Ausführungsform des erfindungsgemäßen Fahrzeuglifts ist dadurch gekennzeichnet, dass an mindestens einer Seitenkante der Plattform parallel zu deren horizontalen Bewegungsrichtung eine Rampe drehbar gelagert ist. Ihre Drehachse ist parallel zur jeweiligen Seitenkante ausgerichtet. Die Rampe ermöglicht einen besonders einfachen Zu- und Ausstieg auf die Plattform durch einen kontinuierlichen Übergang zwischen Straße bzw. zum Boden. Insbesondere für Rollstuhlfahrer wird damit der Ein- und Ausstieg auf die Plattform erleichtert. Die drehbare Lagerung der Rampe ermöglicht desweiteren die flexible Anpassung der Rampe an die Gegebenheiten des Untergrunds.

Vorteilhaft ist eine Ausführungsform der Rampe, bei der ein Abschnitt der Rampe in einem Winkel von 70 bis 110° zur Plattform ausgerichtet ist, wenn sich die Plattform zwischen der oberen und unteren Position befindet. Die durch eine Vorspannung erzeugte, im Wesentlichen vertikale Ausrichtung der Rampen relativ zur Plattform bietet dem Anwender einen Schutz gegen Abrutschen oder Abrollen aus der Plattform heraus.

Ferner ist eine Ausführungsform des erfindungsgemäßen Fahrzeuglifts bevorzugt, bei dem die Rampe eine Abschrägung in ihrem vorderen Bereich aufweist. Beim Einfahren der Plattform wirkt die Abschrägung mit einer Gestellkante zusammen und dreht die Rampe gegen die Vorspannung in eine annähernd waagrechte Position. Mittels dieser Ausführungsform ist die Rampe besonders einfach in eine platzsparende Position verdrehbar, wenn die Plattform in die eingefahrene Stellung verfahren wird. Das Verschwenken der Rampe in ihre, dem Auf- bzw. Abfahren eines Rollstuhles dienende Betriebsposition geschieht beim Absenken der Plattform automatisch durch die von der Straße auf die nach unten weisende Kante der Rampe ausgeübte Kraft.

Ein weiterer Aspekt der Erfindung betrifft ein Kraftfahrzeug mit einem Fahrzeuglift nach einem der oben genannten Ausführungsformen.

Ein Ausführungsbeispiel der Erfindung ist im Folgenden mithilfe von Zeichnungen näher beschrieben, bei denen es sich um Skizzen handelt. In der Zeichnung zeigen:
- Figur 1: eine perspektivische Ansicht eines Fahrzeuglifts gemäß dem Ausführungsbeispiel,

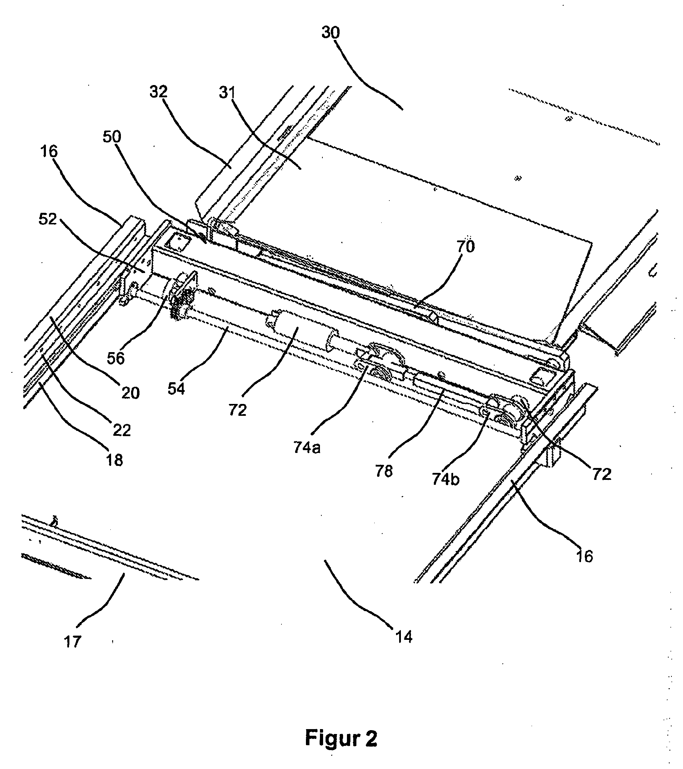

- Figur 2: eine vergrößerte Ansicht einer Antriebseinheit des Fahrzeuglifts,

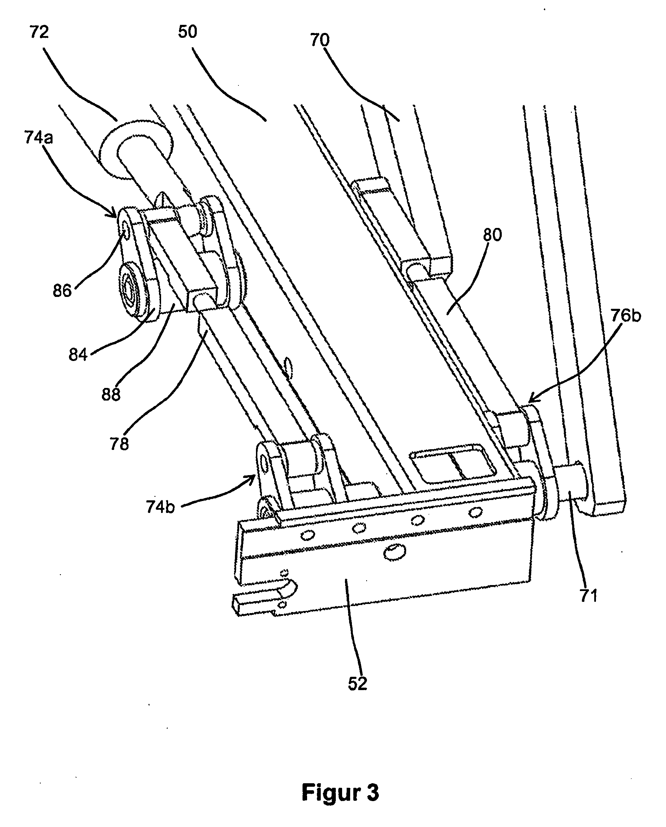

- Figur 3: einen vergrößerten Ausschnitt auf die Anordnung einer ersten Kuppelstange des Fahrzeuglifts, und

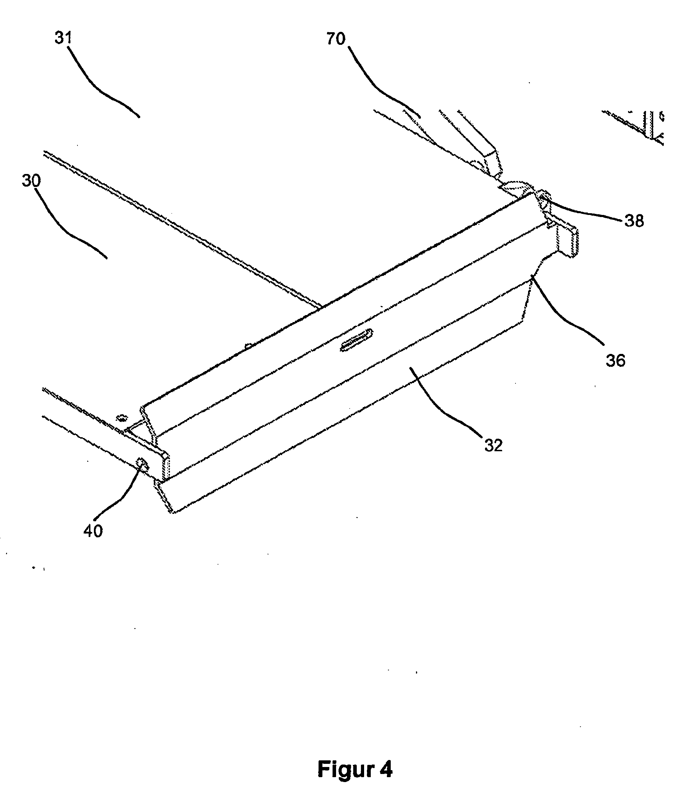

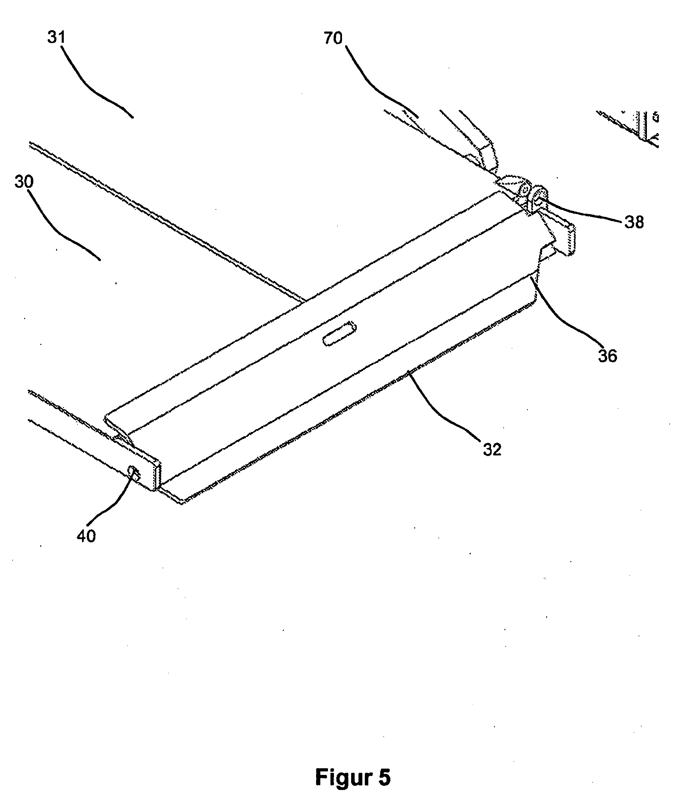

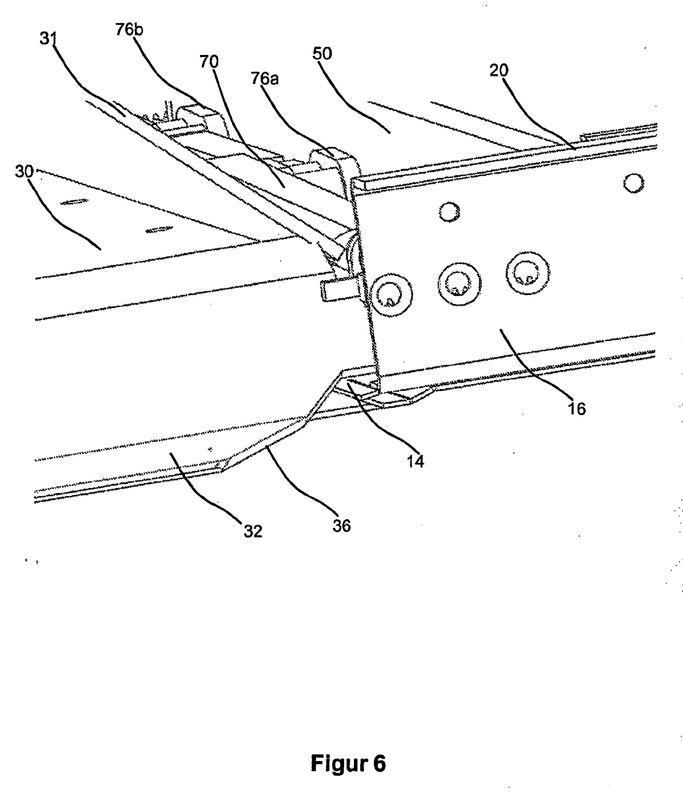

- Figuren 4, 5, 6: einen vergrößerten Ausschnitt einer drehbar gelagerten Rampe in unterschiedlichen Betriebsstellungen;

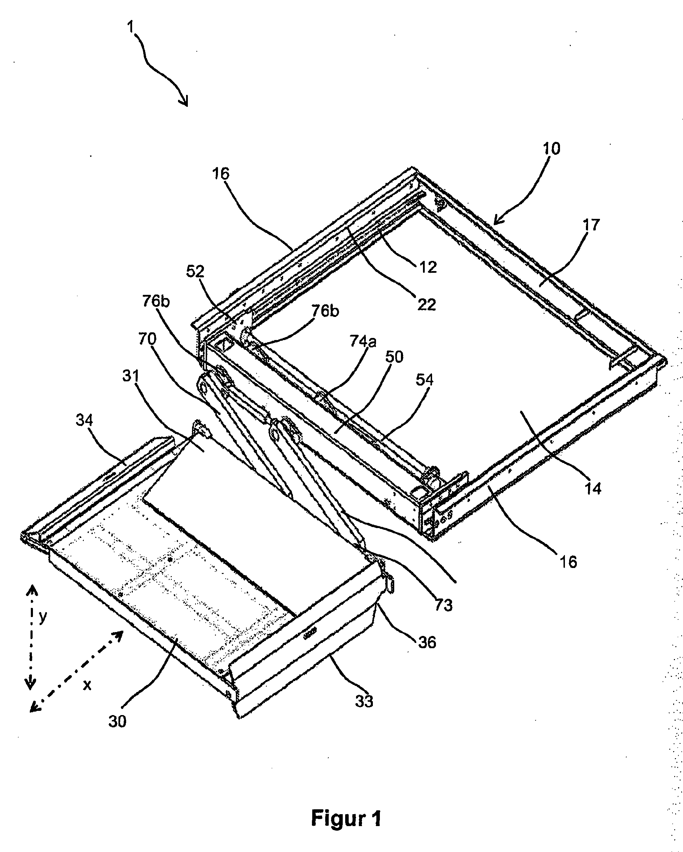

Figur 1 zeigt einen Fahrzeuglift 1 in Form einer Kassette mit einem Gehäuse 10, einer zumindest teilweise am Gehäuse 10 geführten Plattform 30, zwei Tragarmen 70 zum Bewegen der Plattform 30 zwischen einer unteren und oberen Position relativ zum Gestell in vertikaler Bewegungsrichtung y und einem Schlitten 50 innerhalb des Gehäuses 10, zum Tragen und Verfahren der Plattform 30 in horizontaler Bewegungsrichtung x. Am Schlitten 50 befindet sich eine Antriebseinrichtung 72 zum Bewegen der Tragarme 70 und ein Schlittenantrieb zum Verfahren des Schlittens 50 innerhalb des Gehäuses 10. Der Fahrzeuglift wird an der Unterseite des Bodens eines Kraftfahrzeugs unter einer Seitentür oder am Heck montiert. Sowohl der Schlittenantrieb als auch das Kraftfahrzeug sind nicht in den Figuren abgebildet.

Das Gehäuse 10 besitzt eine viereckige Bodenplatte 14, die im Wesentlichen flächig und ebenförmig ausgebildet ist. An drei Seitenkanten der Bodenplatte 14 sind zwei Seitenwände 16 und eine Rückwand 17 jeweils mit einem profilierten Querschnitt angebracht. Die Seitenwände 16 befinden sich an den Kanten der Bodenplatte 14, die parallel zur horizontalen Bewegungsrichtung x verlaufen. Die Rückwand 17 ist senkrecht zu den Seitenwänden 16 angeordnet und verbindet deren rückwärtigen Enden. Die offene Vorderseite des Gehäuses wird im Wesentlichen auf Höhe fluchtend zur Seiten- bzw. Heckwand eines Kraftfahrzeugs ausgerichtet. Das Gehäuse 10 weist dann neben seiner Bodenplatte drei geschlossene und eine offene Seite auf. Die Plattform 30 wird zwischen einer eingefahrenen Stellung innerhalb des Gehäuses 10 und einer ausgefahrenen Stellung vollständig außerhalb des Gehäuses 10 durch die offene Seite des Gehäuses verfahren. In Figur 1 ist die vollständig ausgefahrene Stellung der Plattform 30 gezeigt.

Die Seitenwände 16 und die Rückwand 17 sind mit der Bodenplatte 14 mittels mehrerer Schrauben oder anderweitig verbunden. Die Wände 16, 17 weisen jeweils zwei Flansche 18, 20 auf. Einer der Flansche 18 dient zum Verbinden der Wände 16, 17 mit der Bodenplatte 14 und der andere Flansch 20 ist zum Anbringen des Fahrzeuglifts 1 an einem Kraftfahrzeug vorgesehen. Vorgesehen sein kann eine Deckelplatte, die den Lift 1 nach oben hin abschließt und im Wesentlichen identisch zur Bodenplatte 14 geformt ist. Die Seitenwände 16 sind an ihrer Innenseite mit jeweils einer sich in Bewegungsrichtung x erstreckenden Verzahnung 12 versehen. Ferner sind U-förmige Führungsschienen 22 für eine Laufrollführung des Schlittens 50 an der Innenseite der Seitenwände 16 vorgesehen, die sich entlang der Bewegungsrichtung x erstrecken.

Der Schlitten 50 hat die Form eines etwa quadratischen Balkens. An den beiden Seitenflächen des Schlittens 50, parallel zur Bewegungsrichtung x ist jeweils eine Führungsplatte 52 angebracht. Die Führungsplatten 52 tragen jeweils einen, in einer der beiden Laufrollen eingreifenden Rollenläufer, so dass ein reibungsarmes und klapperfreies Verfahren des Schlittens und damit auch der Plattform gewährbar ist. Diese sind nicht in den Figuren dargestellt. Der Schlitten 50 ist hohl ausgebildet. Im Inneren der Aushöhlung des Schlittens 50 befindet sich im Ausführungsbeispiel ein Scheibenwischermotor als Schlittenantrieb. Der Scheibenwischermotor arbeitet über ein Getriebe 56 aus mehreren Zahnrädern auf einer Antriebswelle 54. Diese ist parallel zum Schlitten 50 angeordnet und weist an beiden Enden jeweils ein Zahnrad auf, das in die von einer Zahnstange gebildete Verzahnungen 12 an den Seitenwänden 16 eingreift. Ferner sind parallel zum Schlitten 50 zwei Tragarme 70 zum Heben und Senken der Plattform 30 und eine Antriebseinrichtung 72 für die Tragarme 70 angeordnet. Jeder Tragarm 70 ist drehfest auf einer Antriebswelle 71 befestigt, die senkrecht zur Längserstreckung des Tragarmes von dessen einem Ende absteht. Vom anderen Ende jedes Tragarms steht eine Lagerwelle 73 ab, deren Längsachse parallel zur Längsachse der Antriebswelle 71 verläuft und die drehfest mit dem Tragarm verbunden sein kann. Der Tragarm mit den beiden Wellen hat dadurch die Form einer Kurbel.

Die Tragarme 70 befinden sich auf der Seite des Schlittens 50, die relativ zum Gehäuse 10 nach außen hin gerichtet ist. Jeder Tragarm 70 ist mittels der Antriebswelle 71 am Schlitten gelagert. Die Längsachsen jeder Antriebswelle 71 verlaufen im Wesentlichen in der horizontalen Bewegungsrichtung x. Die Tragarme 70 sind in zueinander parallelen Schwenkebenen, die senkrecht zur horizontalen Bewegungsrichtung der Plattform verlaufen, angeordnet und mittels der Antriebseinrichtung 72 um die Antriebswellen 54 gleichsinnig synchron verschwenkbar. Der Abstand zwischen den jeweiligen Schwenkebenen entspricht mindestens der Dicke der Tragarme 70, so dass sie sich beim Verschwenken nicht gegenseitig berühren. Um eine optimale Hubhöhe der Plattform zu erreichen, muss man den Abstand zwischen den Längsachsen der beiden Wellen 71, 73 jedes Tragarmes 70 möglichst groß machen. Im Ausführungsbeispiel ist dieser Abstand dadurch optimiert, dass die Wellen 71, 73 an den Enden der Tragarme 70 angeordnet sind und die Länge der Tragarme 70 soweit maximiert ist, dass sie platzfüllend innerhalb des Gehäuses 10 verstaubar sind. Die Tragarme 70 sind dann optimal verstaubar, wenn sie diagonal zum Schlitten 50 angeordnet sind. Hierfür ist es nützlich, die Achsen der Antriebswelle 71 unter- oder oberhalb der horizontalen Mittellinie und auf einer Längshälfte des Schlittens 50 anzuordnen.

Die Antriebseinrichtung 72 für die Tragarme 70 weist einen Hubzylinder auf und befindet sich auf der Innenseite des Schlittens 50 im Inneren des Gehäuses 10. Der Hubzylinder ist an seinem Ende drehbar am Schlitten 50 gelagert. Die Kolbenachse verläuft parallel zu den Schwenkebenen der Tragarme 70. Nicht in den Figuren dargestellt sind Leitungen für die Zufuhr des Druckmittels zum Hubzylinder.

Erste Hebelarme 74a, 74b befinden sich jeweils an den freien Enden der Antriebswellen 71 der Tragarme 70 auf der Innenseite des Schlittens. Sie weisen jeweils einen Rohrabschnitt 88 und einen Lagerstift 86 auf, die zwischen Hebelarmplatten 84 befestigt sind. Der Rohrabschnitt 88 ist mittels einer Presspassung mit der Antriebswelle 71 verbunden. Denkbar wäre auch eine Nut-Feder Verbindung zwischen dem Rohrabschnitt 88 und der Antriebswelle 71 oder alternativ ein Aufschweißen der Hebelarmplatten 84 direkt auf der Antriebswelle 71. Die ersten Hebelarme 74a, 74b sind auf der Antriebswelle 71 synchron zueinander angeordnet, d. h. dass der Winkel der Hebelarme 74a, 74b relativ zur horizontalen Ebene identisch ist. Zum Antreiben der Tragarme 70 ist das freie Ende der Kolbenstange des Hubzylinders 72 an dem Lagerstift 86 des Hebelarms 74a drehbar gelagert. Um ausreichend Platz für die Lagerung zu bieten, sind der Rohrabschnitt 88 und der Lagerstift 86 des einen Hebelarms 74a axial länger ausgebildet als die des anderen Hebelarms 74b.

Ferner befinden sich zweite Hebelarme 76a, 76b zwischen der äußeren Stirnseite des Schlittens 50 und den Tragarmen 70 axial beabstandet zu den ersten Hebelarmen 74a, 74b auf den Antriebswellen 71. Diese können aus Lagerblöcken bestehen, welche alternativ auf die in der Darstellung obere Oberfläche der Tragarme im Bereich der Antriebswelle aufgeschweißt sind; sie sind in der Zeichnung nicht dargestellt. Die ersten Hebelarme 74a, 74b und die zweiten Hebelarme 76a, 76b sind somit auf unterschiedlichen Stirnseiten des Schlittens 50 angeordnet. Die zweiten Hebelarme 76a, 76b sind entsprechend zu den ersten Hebelarmen 74a, 74b synchron ausgerichtet.

Erste und zweite Kuppelstangen 78, 80 sind jeweils zwischen den beiden ersten und den beiden zweiten Hebelarmen 74a, 74b, 76a, 76b angeordnet. Sie sind parallel zum Schlitten ausgerichtet und mit ihren Enden jeweils an den Lagerstiften 86 drehbar gelagert. Einerseits stellen die Kuppelstangen 78, 80 den Antrieb derjenigen Antriebswelle 71 sicher, deren Hebelarm 74b dafür nicht mit dem Hubzylinder 72 verbunden ist. Zugleich sorgt die Kuppelstange, dass die Antriebswellen 71 synchron angetrieben werden. Beide Kuppelstangen 78, 80 weisen im Bereich der Lagerung mit den Hebelarmen 74, 76 einen im Querschnitt verjüngten Absatz auf, sodass der Drehbereich der Hebelarme 74, 76 vergrößert wird.

Die Plattform 30 wird von den beiden, voneinander in horizontaler Richtung beabstandeten Lagerwellen 73 getragen. Diese greifen in innerhalb oder unterhalb der Plattform vorgesehene Lager ein. Die Lagerwellen 73 verlaufen senkrecht zur Schwenkebene, so dass die Plattform 30 horizontal ausgerichtet ist. Die Plattform 30 ist aus einem Blech geformt, das an der Unterseite mittels Querstreben verstärkt ist.

Eine trapezförmige Brückenplatte 31 ist an der in Ausfahrrichtung hinteren Kante der Plattform 30 benachbart zu den Tragarmen an der Plattform 30 drehbar gelagert. Die Brückenplatte 31 ist mittels einer Drehfeder vorgespannt gelagert und erweitert die Plattform 30 im ausgefahrenen und angehobenem Zustand entgegen der Ausfahrrichtung. Der Schwenkbereich der Brückenplatte beträgt ungefähr 180°. Die Drehachse 38 der Brückenplatte 31 verläuft unmittelbar benachbart und parallel zu hinteren Seitenkante der Plattform 30.

Ein in der Zeichnung nicht dargestellter Stopper verhindert, dass die Brückenplatte in der ausgefahrenen Stellung der Plattform gegen das Fahrzeug anschlägt. In einem Ausführungsbeispiel besteht der Stopper aus zwei Rollen auf einer gemeinsamen. Die Rollen sind an dem Tragarm 70a im Bereich des lagerwellenseitigen Endes angebracht.

An den parallelen Seitenkanten, senkrecht zur hinteren Kante, befinden sich jeweils zwei Rampen 32, 94 an der Plattform 30. Die erste der beiden Rampen 32 ist drehbar gelagert. Die drehbare Rampe 32 ist aus einem profilierten Blech mit drei zueinander angewinkelten flachen Abschnitten gefertigt. Ein platttenseitiger und bodenseitiger Abschnitt an den Längskanten der Rampe sind parallel zueinander versetzt angeordnet. Ein mittlerer Abschnitt verläuft diagonal zwischen dem platten- und bodenseitigen Abschnitt und verbindet diese. Die Drehachse der Rampe verläuft etwa mittig entlang der Längsachse des mittleren Abschnitts. Der Abstand zwischen dem platten- bzw. bodenseitigen Abschnitt und der Drehachse wirkt daher als Hebel. Die zum Schlitten 50 benachbarte Ecke des bodenseitigen Abschnitts weist eine Abschrägung 36, auf die mit der vorderen Kante der Bodenplatte 14 zusammenwirkt. Eine zweite Rampe 94 ist in horizontaler Richtung senkrecht zu der Seitenkante der Plattform verfahrbar.

Zum Befördern einer Person, insbesondere eines Rollstuhlfahrers, verfährt der Schlitten 50 die Plattform 30 aus der eingefahrenen Stellung in die ausgefahrene Stellung. In letzterer Stellung befindet sich die Plattform 30 vollständig außerhalb des Gehäuses 10. Die Plattform 30 wird dann aus der Einbauhöhe des Fahrzeuglifts 1 im Fahrzeug auf die Bodenhöhe mittels Verschwenken der Tragarme 70 abgesenkt. Die drehbar gelagerte Brückenplatte 31 schwenkt aufgrund der Drehfederspannung entgegen der Ausfahrrichtung hoch. Ein Abschnitt der Brückenplatte 31 schlägt dann im Bereich der Drehachse gegen den Stopper und verhindert, dass die Brückenplatte 31 gegen das Fahrzeug schlägt. In dieser Phase nimmt die Brückenplatte 31 zunächst eine vertikale Ausrichtung zur Plattform ein. Dies entspricht nicht der Darstellung in den Skizzen. Darin ist die Brückenplatte geneigt dargestellt, um andere Elemente nicht zur verdecken. Die drehbare Rampe 32 richtet sich in dieser Phase aus einer liegenden Position senkrecht zur Plattform auf.

Im zweiten Schritt legt sich die Plattform 30 in ihrer untersten Position auf den Boden. Die drehbare Rampe 32 wird bei dieser Bewegung durch den Boden in ihre liegende Stellung gedreht. Wenn die Plattform 30 vollständig abgesenkt ist, liegt der bodenseitige Abschnitt eben auf dem Boden und die plattenseitige Abschnitt der Rampe eben auf der Plattform auf. Der mittlere Abschnitt der Rampe bildet den kontinuierlichen Übergang zwischen dem Boden und der Plattformfläche und erleichtert damit das Auf- und Abfahren des Rollstuhlfahrers 5.

Sobald sich der Rollstuhlfahrer auf der Plattform 30 befindet, wird die Plattform 30 aus der unteren Position mittels Verschwenken der Tragarme 70 in die obere Position auf Höhe des Passagierraumbodens des Kraftfahrzeugs angehoben. Die Plattform 30 befindet sich in dieser Phase oberhalb des Gehäuses 10 des Fahrzeuglifts 1. In dieser Position befindet sich der Stopper unterhalb der Drehachse der Brückenplatte 31, so dass diese sich etwa um 180° relativ zur Plattform weiterdreht und mit ihrem freien Ende auf dem Innenboden des Kraftfahrzeugs aufliegt. Die drehbare Rampe 32 dreht sich aufgrund der Schwerkpunktlage um die Drehachse und nimmt ihre senkrechte Stellung zur Plattform ein.

Darauffolgend, wenn der Rollstuhlfahrer in das Kraftfahrzeug hinein gerollt ist, wird die Plattform 30 auf Höhe des Gehäuses 10 abgesenkt und in das Gehäuse 10 eingefahren. Beim Einfahren der Plattform 30 schlägt die Brückenplatte 31 an der Vorderkante des Gehäuses. Die Brückenplatte 31 wird zur Plattform 30 hin verschwenkt, bis sie im vollständig eingefahrenen Zustand etwa parallel zur Plattform 30 ausgerichtet ist. Die drehbare Rampe 32 berührt mit der Abschrägung 36 die Bodenplatte des Gehäuses 10 und wird dadurch aus der senkrechten Stellung zur Plattform 30 in eine waagrecht orientierte Stellung zur Plattform 30 hin geführt. Um die Kanten der Deckel- und Bodenplatte 14 zu schonen, können die jeweiligen Kanten mit einem dämpfenden Material überzogen sein.

## Patentansprüche

1. Fahrzeuglift (1) in Form einer Kassette, insbesondere für Rollstuhlfahrer, mit:
einem Gestell (10), Gehäuse oder dgl.,
einer zumindest teilweise am Gestell (10) geführten Plattform (30), die sich in einer eingefahrenen Stellung zumindest teilweise innerhalb des Gestells (10) befindet und zwischen der eingefahrenen Stellung und einer ausgefahrenen, sich vollständig außerhalb des Gestells (10) befindlichen Stellung verfahrbar ist, und die Plattform (30) in der ausgefahrenen Stellung zwischen einer unteren und einer oberen Position relativ zum Gestell (10) bewegbar ist und
mindestens einem Tragarm (70) zum Bewegen der Plattform (30) zwischen der unteren und oberen Position, wobei jeder Tragarm (70) drehfest mit einer Antriebswelle (71) und mit einer achsparallel sowie beabstandet dazu verlaufenden Tragwelle (73) verbunden und dadurch als Kurbelarm ausgebildet ist,
**dadurch gekennzeichnet, dass** jeder Tragarm (70) in der ausgefahrenen Stellung der Plattform (30) in einer senkrechten Ebene zwischen der Plattform (30) und dem Gestell (10) schwenkbar ist, die senkrecht zur horizontalen Bewegungsrichtung (x) der Plattform (30) verläuft.

2. Lift nach Anspruch 1,
**dadurch gekennzeichnet, dass** zwei horizontal beabstandete Tragarme (70) in zueinander parallelen Schwenkebenen, die senkrecht zur horizontalen Bewegungsrichtung (x) der Plattform (30) verlaufen, angeordnet und gleichsinnig synchron bewegbar sind.

3. Lift nach Anspruch 1 oder 2,
**dadurch gekennzeichnet, dass** im Gestell (10) ein die Plattform (30) tragender und verfahrbarer Schlitten (50) vorgesehen ist.

4. Lift nach Anspruch 3,
**dadurch gekennzeichnet, dass** jeder Tragarm (70) mittels seiner Antriebswelle (71) am Schlitten (50) gelagert ist und die Längsachsen jeder Antriebswelle (71) im Wesentlichen in der horizontalen Bewegungsrichtung (x) verlaufen.

5. Lift nach einem der vorstehenden Ansprüche,
**dadurch gekennzeichnet, dass** die Längsachsen der Antriebswellen (71) im Wesentlichen unter- oder oberhalb der Plattform (30) in der eingefahrenen Stellung angeordnet sind.

6. Lift nach einem der vorstehenden Ansprüche,
**dadurch gekennzeichnet, dass** von jeder Antriebswelle (71) ein erster Hebelarm (74a, 74b) radial absteht und die freien Enden der Hebelarme (74a, 74b) benachbarter Antriebswellen (71) mittels einer Kuppelstange (78, 80) verbunden sind.

7. Lift nach Anspruch 6,
**dadurch gekennzeichnet, dass** von jeder Antriebswelle (71) ein zweiter Hebelarm (76a, 76b) radial absteht, der zum ersten Hebelarm (74a, 74b) der Antriebswelle axial beabstandet ist, und die freien Enden der zweiten Hebelarme (76a, 76b) benachbarter Antriebswellen mittels einer weiteren Kuppelstange (78, 80) verbunden sind.

8. Lift nach Anspruch 7,
**dadurch gekennzeichnet, dass** die ersten Hebelarme (74a, 74b) auf der einen und die zweiten Hebelarme (76a, 76b) auf einer anderen Stirnseite des Schlittens (50) angeordnet sind.

9. Lift nach Anspruch 8 mit einer Antriebseinrichtung (72) zum Schwenken der Tragarme (70),
**dadurch gekennzeichnet, dass** die Antriebseinrichtung (72) an einem der Hebelarme (74a) auf der einen Stirnseite des Schlittens angreift und die Tragarme (70) sich auf der anderen Stirnseite des Schlittens (50) befinden.

10. Lift nach Anspruch 9,
**dadurch gekennzeichnet, dass** die Antriebseinrichtung (72) einen hydraulischen Hubzylinder enthält, dessen Hubachse parallel zur Schwenkebene der Tragarme (70) ausgerichtet ist.

11. Lift nach einem der vorstehenden Ansprüche,
**dadurch gekennzeichnet, dass** das Gestell (10) an seiner Innenseite entlang der horizontalen Bewegungsrichtung (x) der Plattform (30) eine Verzahnung (12) aufweist, in die ein Antriebszahnrad eines Schlittenantriebs eingreift.

12. Lift nach einem der Ansprüche 3 bis 11,
**dadurch gekennzeichnet, dass** der Schlitten (50) hohl ausgebildet ist und der Schlittenantrieb sich innerhalb des Schlittens (50) befindet.

13. Lift nach Anspruch 11 oder 12,
**dadurch gekennzeichnet, dass** der Schlittenantrieb einen Elektromotor enthält.

14. Lift nach einem der vorstehenden Ansprüche,
**dadurch gekennzeichnet, dass** die Plattform (30) in ihrem in Ausfahrrichtung hinterem Bereich eine um etwa 180° schwenkbare Brückenplatte (31) aufweist, welche die Plattform (30) entgegen der Ausfahrrichtung erweitert und um eine Drehachse (38) parallel zur Schwenkebene der Tragarme (70) vorgespannt gelagert ist.

15. Lift nach Anspruch 14,
**dadurch gekennzeichnet, dass** die Brückenplatte (31) beim Einfahren der Plattform (30) aus einer, die Plattform (30) in Einfahrrichtung verlängernden Position in eine in Ausfahrrichtung weisende Position durch Anlage der Brückenplatte (31) an einer Gestellkante verschwenkbar ist und die Gestellkante diejenige Kante des Gestells (10) ist, welche sich im eingefahrenen Zustand der Plattform (30) oberhalb der Plattform (30) senkrecht zu der Ausfahrrichtung und benachbart zur Schwenkebene erstreckt.

16. Lift nach Anspruch 14 oder 15,
**dadurch gekennzeichnet, dass** die Brückenplatte (31) mittels einer Drehfeder vorgespannt gelagert ist.

17. Lift nach einem der vorstehenden Ansprüche,
**dadurch gekennzeichnet, dass** an mindestens einer Seitenkante der Plattform (30) parallel zu deren horizontalen Bewegungsrichtung (x) eine Rampe (32) vorgesehen ist, die drehbar gelagert ist und eine Drehachse (40) aufweist, die parallel zur jeweiligen Seitenkante ausgerichtet ist.

18. Lift nach Anspruch 17,
**dadurch gekennzeichnet, dass** ein Abschnitt der Rampe (31) in einem Winkel von 70° bis 110° zur Plattform ausgerichtet ist, wenn sich die Plattform (30) zwischen der oberen und unteren Position befindet.

19. Lift nach Anspruch 17,
**dadurch gekennzeichnet, dass** die Rampe (31) eine Abschrägung (36) aufweist, die beim Einfahren der Plattform mit einer Gestellkante zusammenwirkt, um die Rampe (32) in eine annähernd waagrechte Position zu drehen.

20. Kraftfahrzeug mit einem Fahrzeuglift (1) nach einem der Ansprüche 1 bis 19.

## Claims

1. A vehicle lift (1) in the form of a cassette, in particular for wheelchair users, with:
a frame (10), housing or the like,
a platform (30) which is guided at least partially on the frame (10), which platform in a retracted position is located at least partially within the frame (10) and is displaceable between the retracted position and an extended position located completely outside the frame (10), and the platform (30) in the extended position is movable between a lower and an upper position relative to the frame (10), and
at least one supporting arm (70) for moving the platform (30) between the lower and upper position, each supporting arm (70) being connected in rotation-resistant manner to a drive shaft (71) and to a supporting shaft (73) which extends paraxially and spaced apart therefrom and thereby being formed as a crank arm,
**characterised in that** each supporting arm (70) in the extended position of the platform (30) is pivotable in a perpendicular plane between the platform (30) and the frame (10) which extends perpendicular to the horizontal direction of movement (x) of the platform (30).

2. A lift according to Claim 1, **characterised in that** two horizontally spaced-apart supporting arms (70) are arranged and are synchronously movable in the same direction in pivoting planes which are parallel to one another and which extend perpendicular to the horizontal direction of movement (x) of the platform (30).

3. A lift according to Claim 1 or 2, **characterised in that** a slide (50) which supports the platform (30) and is displaceable is provided in the frame (10).

4. A lift according to Claim 3, **characterised in that** each supporting arm (70) is mounted on the slide (50) by means of its drive shaft (71) and the longitudinal axes of each drive shaft (71) extend substantially in the horizontal direction of movement (x).

5. A lift according to one of the preceding claims, **characterised in that** the longitudinal axes of the drive shafts (71) are arranged substantially below or above the platform (30) in the retracted position.

6. A lift according to one of the preceding claims, **characterised in that** a first lever arm (74a, 74b) projects radially from each drive shaft (71) and the free ends of the lever arms (74a, 74b) of adjacent drive shafts (71) are connected by means of a coupling rod (78, 80).

7. A lift according to Claim 6, **characterised in that** a second lever arm (76a, 76b) projects radially from each drive shaft (71), which arm is axially spaced apart from the first lever arm (74a, 74b) of the drive shaft, and the free ends of the second lever arms (76a, 76b) of adjacent drive shafts are connected by means of a further coupling rod (78, 80).

8. A lift according to Claim 7, **characterised in that** the first lever arms (74a, 74b) are arranged on the one face side and the second lever arms (76a, 76b) on another face side of the slide (50).

9. A lift according to Claim 8 with a drive means (72) for pivoting the supporting arms (70), **characterised in that** the drive means (72) acts on one of the lever arms (74a) on the one face side of the slide and the supporting arms (70) are located on the other face side of the slide (50).

10. A lift according to Claim 9, **characterised in that** the drive means (72) contains a hydraulic lifting cylinder, the lifting axis of which is oriented parallel to the pivoting plane of the supporting arms (70).

11. A lift according to one of the preceding claims, **characterised in that** the frame (10) has on its inside along the horizontal direction of movement (x) of the platform (30) a set of teeth (12) in which a drive gear wheel of a slide drive engages.

12. A lift according to one of Claims 3 to 11, **characterised in that** the slide (50) is made hollow and the slide drive is located within the slide (50).

13. A lift according to Claim 11 or 12, **characterised in that** the slide drive contains an electric motor.

14. A lift according to one of the preceding claims, **characterised in that** the platform (30) in its rear region in the direction of extension has a bridge plate (31) which is pivotable by approximately 180°, which widens the platform (30) counter to the direction of extension and is mounted pre-stressed about an axis of rotation (38) parallel to the pivoting plane of the supporting arms (70).

15. A lift according to Claim 14, **characterised in that** the bridge plate (31) upon retracting the platform (30) is pivotable out of a position which extends the platform (30) in the direction of retraction into a position pointing in the direction of extension by the bridge plate (31) lying against a frame edge, and the frame edge being that edge of the frame (10) which in the retracted state of the platform (30) extends above the platform (30) perpendicular to the direction of extension and adjacent to the pivoting plane.

16. A lift according to Claim 14 or 15, **characterised in that** the bridge plate (31) is mounted pre-stressed by means of a torsion spring.

17. A lift according to one of the preceding claims, **characterised in that** a ramp (32) is provided on at least one lateral edge of the platform (30) parallel to the horizontal direction of movement (x) thereof, which ramp is rotatably mounted and has an axis of rotation (40) which is oriented parallel to the respective lateral edge.

18. A lift according to Claim 17, **characterised in that** a section of the ramp (31) is oriented at an angle of 70° to 110° to the platform if the platform (30) is located between the upper and lower position.

19. A lift according to Claim 17, **characterised in that** the ramp (31) has a chamfered section (36) which upon retraction of the platform cooperates with a frame edge in order to turn the ramp (32) into an approximately horizontal position.

20. A motor vehicle with a vehicle lift (1) according to one of Claims 1 to 19.

## Revendications

1. Ascenseur pour véhicules (1) sous forme d'un caisson, destiné en particulier à des personnes en fauteuil roulant, comprenant :
un châssis (10), boîtier ou similaire,
une plate-forme (30) guidée au moins en partie au niveau du châssis (10), laquelle se trouve dans une position rentrée au moins en partie à l'intérieur du châssis (10) et peut être déplacée entre la position rentrée et une position déployée, située complètement à l'extérieur du châssis (10), et la plate-forme (30) peut être déplacée, dans la position déployée, entre une position inférieure et une position supérieure par rapport au châssis (10), et
au moins un bras porteur (70) pour déplacer la plate-forme (30) entre la position inférieure et la position supérieure, chaque bras porteur (70) étant relié de manière solidaire en rotation à un arbre d'entraînement (71) et à un arbre porteur (73) s'étendant de manière parallèle à l'axe et à distance dudit arbre d'entraînement et est réalisé ce faisant sous la forme d'un bras de manivelle,
**caractérisé en ce que** lorsque la plate-forme (30) se trouve dans une position déployée, chaque bras porteur (70) peut être pivoté entre la plate-forme (30) et le châssis (10) dans un plan perpendiculaire qui s'étend perpendiculairement à la direction de déplacement (x) horizontale de la plate-forme (30).

2. Ascenseur selon la revendication 1,
**caractérisé en ce que** deux bras porteurs (70) écartés horizontalement sont disposés dans des plans de pivotement parallèles entre eux, qui s'étendent perpendiculairement à la direction de déplacement (x) horizontale de la plate-forme (30), et peuvent être déplacés de manière synchrone dans le même sens.

3. Ascenseur selon la revendication 1 ou 2,
**caractérisé en ce qu'**un chariot (50) supportant la plate-forme (30) et pouvant être déplacé est prévu dans le châssis (10).

4. Ascenseur selon la revendication 3,
**caractérisé en ce que** chaque bras porteur (70) est logé au niveau du chariot (50) au moyen de son arbre d'entraînement (71), et **en ce que** les axes longitudinaux de chaque arbre d'entraînement (71) s'étendent essentiellement dans la direction de déplacement (x) horizontale.

5. Ascenseur selon l'une quelconque des revendications précédentes,
**caractérisé en ce que** les axes longitudinaux des arbres d'entraînement (71) sont disposés essentiellement au-dessous ou au-dessus de la plate-forme (30) dans la position rentrée.

6. Ascenseur selon l'une quelconque des revendications précédentes,
**caractérisé en ce qu'**un premier bras de levier (74a, 74b) fait saillie radialement de chaque arbre d'entraînement (71), et **en ce que** les extrémités libres des bras de levier (74a, 74b) des arbres d'entraînement (71) adjacents sont reliées au moyen d'une bielle d'accouplement (78, 80).

7. Dispositif selon la revendication 6,
**caractérisé en ce qu'**un deuxième bras de levier (76a, 76b) fait saillie radialement de chaque arbre d'entraînement (71), lequel bras de levier est tenu à distance axialement par rapport au premier bras de levier (74a, 74b) de l'arbre d'entraînement, et **en ce que** les extrémités libres des deuxièmes bras de levier (76a, 76b) des arbres d'entraînement adjacents sont reliées au moyen d'une autre bielle d'accouplement (78, 80).

8. Ascenseur selon la revendication 7,
**caractérisé en ce que** les premiers bras de levier (74a, 74b) sont disposés sur l'un des côtés frontaux du chariot (50) et les deuxièmes bras de levier (76a, 76b) sont disposés sur l'autre côté frontal du chariot (50).

9. Ascenseur selon la revendication 8 comprenant un système d'entraînement (72) pour faire pivoter les bras porteurs (70),
**caractérisé en ce que** le système d'entraînement (72) vient en prise au niveau d'un des bras de levier (74a) sur l'un des côtés frontaux du chariot, et **en ce que** les bras porteurs (70) se trouvent sur l'autre côté frontal du chariot (50).

10. Ascenseur selon la revendication 9,
**caractérisé en ce que** le système d'entraînement (72) comporte un cylindre hydraulique de levage, dont l'axe de levage est orienté de manière parallèle par rapport au plan de pivotement des bras porteurs (70).

11. Ascenseur selon l'une quelconque des revendications précédentes,
**caractérisé en ce que** le châssis (10) présente, au niveau de son côté intérieur, le long de la direction de déplacement (x) horizontale de la plate-forme (30), une denture (12), avec laquelle une roue dentée d'entraînement d'un entraînement de chariot vient en prise.

12. Ascenseur selon l'une quelconque des revendications 3 à 11,
**caractérisé en ce que** le chariot (50) est réalisé de manière creuse, et **en ce que** l'entraînement de chariot se trouve à l'intérieur du chariot (50).

13. Ascenseur selon la revendication 11 ou 12,
**caractérisé en ce que** l'entraînement de chariot comporte un moteur électrique.

14. Ascenseur selon l'une quelconque des revendications précédentes,
**caractérisé en ce que** la plate-forme (30) présente, dans sa zone arrière dans la direction de déploiement, une plaque de passerelle (31) pouvant pivoter d'environ 180°, laquelle agrandit la plate-forme (30) dans le sens opposé à la direction de déploiement et est logée de manière précontrainte autour d'un axe de rotation (38) parallèlement au plan de pivotement des bras porteurs (70).

15. Ascenseur selon la revendication 14,
**caractérisé en ce que** lorsque la plate-forme (30) est rentrée, la plaque de passerelle (31) peut pivoter, par un appui de cette dernière au niveau d'une arête de châssis, depuis une position prolongeant la plate-forme (30) dans la direction de rentrée dans une position dirigée dans la direction de déploiement, et **en ce que** l'arête de châssis est précisément l'arête du châssis (10) qui s'étend, lorsque la plate-forme (30) se trouve dans un état rentré, au-dessus de la plate-forme (30), de manière perpendiculaire par rapport à la direction de déploiement et de manière adjacente par rapport au plan de pivotement.

16. Ascenseur selon la revendication 14 ou 15,
**caractérisé en ce que** la plaque de passerelle (31) est logée de manière précontrainte au moyen d'un ressort de torsion.

17. Ascenseur selon l'une quelconque des revendications précédentes,
**caractérisé en ce qu'**est prévue, au niveau au moins d'une arête latérale de la plate-forme (30), de manière parallèle par rapport à sa direction de déplacement (x) horizontale, une rampe (32) qui est logée de manière à pouvoir tourner et qui présente un axe de rotation (40), qui est orienté de manière parallèle par rapport à l'arête latérale respective.

18. Ascenseur selon la revendication 17,
**caractérisé en ce qu'**une section de la rampe (31) est orientée selon un angle allant de 70° à 110° par rapport à la plate-forme, lorsque la plate-forme (30) se trouve entre la position supérieure et la position inférieure.

19. Ascenseur selon la revendication 17,
**caractérisé en ce que** la rampe (31) présente un biseau (36), qui coopère avec une arête de châssis lorsque la plate-forme est rentrée afin de tourner la rampe (32) dans une position approximativement horizontale.

20. Véhicule automobile équipé d'un Ascenseur pour véhicules (1) selon l'une quelconque des revendications 1 à 19.
